Europäisches Patentamt

European Patent Office

Office européen des brevets

(11) Publication number: **0 129 706**
**A2**

## (12) EUROPEAN PATENT APPLICATION

(21) Application number: **84105735.9**

(22) Date of filing: **19.05.84**

(51) Int. Cl.⁴: **A 23 G 9/12**

(30) Priority: **30.05.83 IT 2199083 U**

(43) Date of publication of application:
**02.01.85 Bulletin 85/1**

(84) Designated Contracting States:
**AT BE CH DE FR GB LI NL SE**

(71) Applicant: Firm: **ALBERTO CIPELLETTI**
**via Emilia**
**I-20070 Guardamiglio (Milan)(IT)**

(72) Inventor: **Cipelletti, Alberto**
**Via Emilia**
**I-20070 Guardamiglio (Milan)(IT)**

(74) Representative: **Marietti, Giuseppe**
**CENTRO DI CONSULENZA IN PROPRIETA' INDUSTRIALE**
**Viale Caldara, 43**
**I-20122 Milano(IT)**

(54) Ice-cream machine with removable vessel.

(57) The invention relates to an ice-cream machine, in particular for family use, of the type having a vessel wherein the ice-cream is made, which is removable from the machine body. To allow for a good thermal exchange, the machine has a vessel container which is divided into two or more parts, each one comprising cooling coils, said parts being resiliently kept in close contact with the vessel walls in a loosenable manner.

Fig. 1

0129706

The present invention relates to an ice-cream machine particularly for family use with a vessel removable from the ice-cream machine body.

More in detail, the present invention relates to an ice-ceam machine of the aforementioned type showing a new configuration and means reciprocal disposition capable of providing the ice-cream machine itself with a new and higher usefulness as well as particular · working efficiency in comparison with the ice-cream machines for family use known up to now.

In the ice-cream machines for family use, the possibility of removing the vessel from the ice-cream machine body presents the considerable advantage of simplifying both the operation of removing ice-cream from the mixing container and the operations of cleaning the container itself.

In fact, particularly after the preparation of ice-creams rich in fat substances, the mixing tank must be washed accurately and the possibility of removing the vessel from the ice-cream machine body allows the use of an abundant jet of hot water, which is ideal for dissolving and eliminating ice-cream residues from the vessel walls.

The possibility of removing the vessel from the ice-cream machine body, however, involves some problems for the technician in the art; in particular it raises the problem of cold transmission between the walls of the vessel container, which are in contact with the evaporator coil of the refrigerating circuit, and the vessel itself.

In fact, considering the impossibility of having a vessel which fits without any clearance in the ice-cream machine body and which is at the same time easily removable, unless the vessel and the ice-cream machine body undergo very expensive preparation processes, it is impossible to avoid, between the vessel and its container, which is integral to the ice-cream machine body, the formation of hollow spaces in which an ice layer tends to form during the ice-cream machine operation.

Said ice layer strongly limits cold transmission between the evaporator coil integral to the vessel container and the vessel itself, thus causing considerable delay in ice-cream preparation. In particular, considering the reduced capacity of the refrigerating circuit in these ice-cream machines for family use, due to their necessarily very limited size and cost, said difficulty in cold transmission may in some cases even prevent the formation of ice-cream.

Furthermore, at the end of the steps for ice-cream preparation, said ice layer hinders an easy removal of the vessel, which remains blocked in the ice-cream machine body with subsequent loss of some of the advantages related to said possibility of removing the vessel itself.

The solution of leaving a hollow space between the vessel and the ice-cream machine body and of filling said hollow space with an antifreezing brine presents the avantages of making the vessel removal easier and of preventing the formation of the ice layer between the vessel and its container, but it involves some inconveniences as well, such as the need of providing a perfect sealing between the vessel container bottom and the driving shaft of the mixing blades, as well as the need of pouring into the container the exact amount of brine having the correct concentration and of eliminating said brine from the container when all the steps for ice-cream praparation are over.

An object of the present invention is to propose an ice-cream machine for family use with a removable vessel, which allows to overcome the aforementioned drawbacks, obtaining in particular an efficient cold transmission between the evaporator coils and the vessel and allowing at the same time an easy removal of the vessel from the ice-cream machine body once ice-cream has formed.

Said object is achieved by means of an ice-cream machine for family use with a vessel removable from the ice-cream machine body, wherein the      walls of the vessel container are formed by at least two different parts, each one comprising a portion of the evaporator coil of the refrigerating circuit, and wherein said different parts are kept in close contact with the side walls of the vessel by elastic means which can be loosened.

In particular, each part forming the vessel container consists of an aluminium element in which a portion of the evaporator coil of the refrigerating circuit is buried or placed.

Main advantages of the ice-cream machine according to the invention are to allow an excellent cohesion between the vessel container walls and the walls of the vessel itself with subsequent optimum cold transmission, though allowing an easy removal of the vessel from the ice-cream machine body when the steps of ice-cream formation are over.

The  features of the ice-cream machine according to the invention are now described in detail with reference to the accompanying drawings.

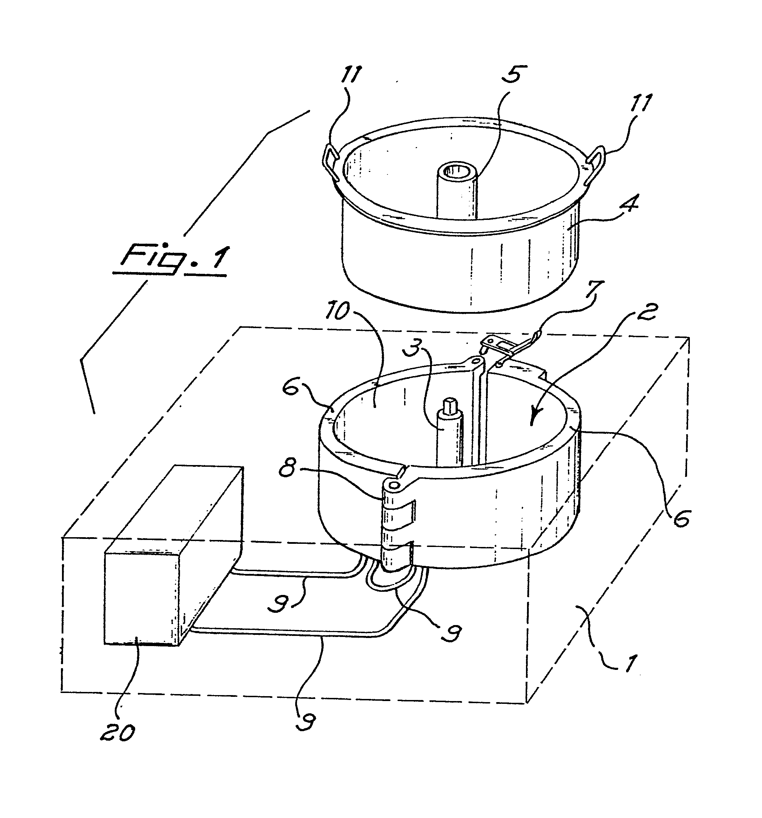

- Fig. 1 is a perspective view of the ice-cream machine and of the vessel in position of reciprocal presentation and with the vessel container in evidence;

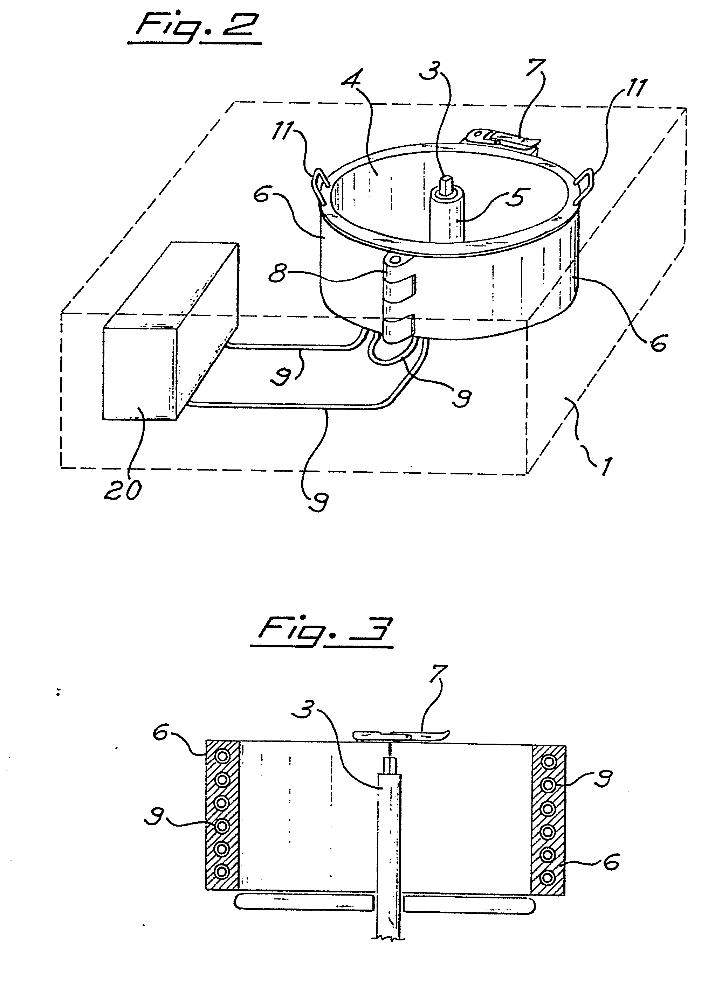

- Fig. 2 is a perspective view of the ice-cream machine of figure 1 with the vessel housed in the ice-cream machine body;

- Fig. 3 is a front cross-sectional view of the parts forming the side walls of the vessel container.

With reference to the aforementioned figures, the ice-cream machine according to the invention comprises a body 1 where a space 2 is provided having a circular section and vertical axis in which a coaxial shaft 3 controlling the rotations of a mixer (not shown) is positioned.

The space 2 can house in a movable way a vessel 4 provided with a bushing 5 which coaxially receives the shaft 3. The space 2 and the vessel 4 of the ice-cream machine have a cylindrical or truncated-cone configuration with its cone turned downwards.

The side walls of the space 2 are formed by two elements 6 made of aluminium or other material having good thermal conductivity and define a container 10 for proper housing of the vessel 4.

One of the elements 6 is fixed to the ice-cream machine body, while the other element 6 is hinged to the fixed elements 6 or to the ice-cream machine body itself.

The ends of the elements 6 opposite to the hinge 8 can be fastened to one another by means of a handle 7.

In this way the internal diameter of the vessel container 10 can be varied by rotating the moving element 6 around the hinge 8. The variations of the internal diameter of the container 10 of the vessel 4 can be of small entity, in that they must simply allow the detachment of the container 10 walls from the side walls of the vessel 4 to facilitate the removal of same from the ice-cream machine body. Furthermore, the internal diameter of the container 10 is slightly lower than the external diameter of the vessel 4 so that the handle 7 exerts an elastic action to reciprocally approach the elements 6 in order to press them tightly against the side walls of the vessel to reduce to the utmost the hollow spaces between the vessel and the container, with subsequent limitation of the formation of ice layer.

Inside each element 6 there is a portion of the evaporator coil 9 of the refrigerating circuit of the ice-cream machine; said coil portion can be buried in the aluminium forming the element 6 itself or, in case the element 6 is formed by two half shells coupled to one another, it can be housed in suitable seat provided on one or both the half shells, the hollow spaces between the half shells and between the coil and the half shells being filled with paste having high thermal conductivity.

Not to hinder the though slight rotations of the moving element 6, the coil 9 goes in and out of each element 6 in correspondence with the hinge 8.

The vessel 4 presents two handles 11 in correspondence to its upper edge by means of which it can be seized and removed from the ice-cream machine body.

Though an ice-cream machine in which the vessel container consists of two parts hinged to one another has been described and illustrated up to now, said container can also be formed by several different parts, each bearing a portion of the evaporator coil, for instance welded on its external part, said parts having the possibility of being removed the ones from the others to facilitate the introduction and removal of the vessel from the ice-cream machine body and of being placed in close contact with the external side walls of the vessel thanks to the elastic action of the spring.

The bottom wall of the space 2 can be placed under conditions of thermal exchange with the evaporator coil of the refrigerating circuit and/or with an electric resistor, according to a well known technique.

It is to be understood that many changes and modifications can be made to the abovestated embodiment without departing from the spirit and scope of the invention.

CLAIMS

1- An ice-cream machine for family use with a vessel removable from the ice-cream machine body, wherein the side walls of a vessel container are formed by at least two different parts, each one comprising a portion of the evaporator coil of the refrigerating circuit and wherein said different parts are kept in close contact with the side walls of the vessel by means of elastic means which can be loosened.

2- An ice-cream machine according to claim 1, wherein each part forming the vessel container is formed by an element made of aluminium or other material having high thermal conductivity, in which a portion of the evaporator coil is buried.

3- An ice-cream machine according to claim 1, wherein each part forming the vessel container is constituted by the reciprocal coupling of two half shells made of aluminium or other material having high thermal conductivity, a portion of the evaporator coil being placed between said half shells.

4- An ice-cream machine according to claim 3, wherein the internal side wall of each of said half shells presents a seat capable of housing the corresponding portion of coil, the hollow spaces between the half shells and between the coil and the half shells being filled with paste having high thermal conductivity.

5- An ice-cream machine according to claim 2, wherein the said walls of the vessel container are formed by two elements hinged to one another at one end and fastened to one another at the opposite end by means of an elastic clamp, the vessel being blocked between said two elements thanks to the elastic action exered by said clamp.

6- An ice-cream machine according to claim 5 wherein

2 one of said elements is fixed to the ice-cream machine body.

7.- An ice-cream machine according to claim 5 wherein the coil goes in and out of each element near the end hinged to the other element.

8- An ice-cream machine according to claim 1, wherein the vessel and its container have a truncated -cone shape with the cone turned downwards.

Fig.1

## Fig. 2

## Fig. 3